# FASCICULE DE BREVET EUROPEEN

(11) **EP 2 531 921 B1**
(45) Date de publication et mention de la délivrance du brevet: **13.05.2015**
(21) Numéro de dépôt: 11706620.9
(22) Date de dépôt: 26.01.2011
(51) Int. Cl.: G06F 11/16, G06F 11/20

(54) **GESTION DU LIEU DE STOCKAGE DE DONNEES DANS UN SYSTEME DE STOCKAGE DISTRIBUE**
VERWALTUNG DES DATENSPEICHERUNGSORTES IN EINEM VERTEILTEN SPEICHERUNGSSYSTEM
MANAGEMENT OF LOCATION OF STORED DATA IN A DISTRIBUTED STORAGE SYSTEM

(30) Priorité: 01.02.2010 FR 1050685
(43) Date de publication de la demande: 12.12.2012
(73) Titulaire: Orange, 75015 Paris (FR)
(72) Inventeur: BARANSKI, Fabrice, F-35000 Rennes (FR)
(74) Mandataire: Guillerm, Patrice
(86) Numéro de dépôt international: PCT/FR2011/050145
(87) Numéro de publication internationale: WO 2011/092425

(56) Documents cités:
- WO-A1-03/012699
- WO-A2-2008/003026
- US-A- 5 727 144
- US-A1- 2002 188 711
- US-A1- 2008 086 610

## Description

L'invention se rapporte à un procédé de gestion du lieu de stockage de données dans un système de stockage distribué. Rappelons qu'un système de stockage distribué comprend plusieurs dispositifs de traitement de données reliés entre eux et formant ensemble un espace de stockage unifié.

Les dispositifs de stockage sont des dispositifs de traitement de données incluant au moins un processeur et au moins une mémoire pour stocker des données numériques ci-après désignées par l'expression contenus numériques. Un dispositif de stockage est par exemple un ordinateur, un radiotéléphone, un lecteur/enregistreur par exemple de type MP3 (acronyme du terme anglais "Windows Media Audio"), un disque dur de type NAS (acronyme anglo-saxon de Network Attached Storage), etc.

Le contenu numérique est quelconque. Celui-ci peut être un contenu musical, un programme d'ordinateur, etc.

Aujourd'hui, un utilisateur dispose de différents dispositifs de traitement de données pour stocker un contenu. Il dispose de dispositifs électroniques fixes tels qu'un ordinateur personnel, un disque dur de type NAS, etc. Il dispose aussi de dispositifs électroniques mobiles tels qu'un radiotéléphone, un appareil photo, etc. Enfin, Il dispose de dispositifs électroniques, le plus souvent des serveurs, offrant des espaces de stockages en ligne (flickR, box.net, ...) accessibles via un réseau par exemple le réseau Internet.

Ces différents dispositifs sont équipés de ressources physiques et logicielles dont au moins un processeur et au moins un espace de stockage permettant de manipuler localement des contenus, une manipulation incluant une lecture et/ou une écriture de données.

Un système de stockage distribué comprend des dispositifs, tels que ceux décrits ci-dessus, reliés entre eux et dont l'ensemble constitue un espace de stockage unifié. En d'autres mots, un utilisateur souhaitant écrire ou lire un contenu dans un système de stockage distribué peut le faire sur un dispositif choisi parmi les dispositifs du système de stockage distribué.

A cet effet, un module de gestion a pour fonction la gestion de la manipulation des données dans l'espace de stockage unifié. Pour cela, le module stocke une liste de contenus, le lieu de stockage de chaque contenu c'est-à-dire le moyen de stockage sur lequel les contenus sont stockées, ainsi que l'emplacement des contenus dans le moyen de stockage. L'emplacement est par exemple si le moyen de stockage est un disque dur, une piste du disque dur et un ou plusieurs secteurs du disque.

Cependant, une anomalie peut survenir sur un dispositif. Par exemple, une panne d'un moyen de stockage tel qu'un disque dur n'est pas rare notamment lorsque le disque est dans un environnement où la température est élevée. En effet, les disques souffrent beaucoup dans des environnements à température élevée et tombent plus rapidement en panne.

Une défaillance d'un dispositif empêche ainsi un accès aux contenus stockés sur le dispositif
- soit temporairement si la défaillance est temporaire et si les données n'ont pas été altérées ;
- soit définitivement si les données ont été altérées ou si le dispositif, en particulier le moyen de stockage, n'est plus en mesure de fonctionner.

L'invention vient améliorer la situation.

A cet effet, l'invention a pour objet un procédé de gestion du lieu de stockage de contenus dans un système de stockage distribué incluant une pluralité de dispositifs de traitement de données reliés entre eux par le biais d'un réseau et comprenant des processeurs respectifs et des moyens de stockage respectifs, caractérisé en ce que lesdits moyens de stockage respectifs forment un espace de stockage unifié dans lequel les données d'un utilisateur peuvent être réparties, système dans lequel à un contenu correspond un lieu de stockage respectif à utiliser lors d'un accès au contenu, et en ce que suite à une détection d'une anomalie survenue sur un dispositif, dit premier dispositif, et qu'une défaillance du dispositif est susceptible de se produire empêchant un accès au contenu stocké sur le dispositif, est déclenchée une étape de transfert, via le réseau d'au moins un contenu stocké dans un premier moyen de stockage d'un premier dispositif vers au moins une deuxième mémoire de l'espace de stockage unifié pour y être stocké, et en ce qu'il comprend en outre une étape de mise à jour du nouveau lieu de stockage.

Ainsi, l'invention offre la possibilité d'anticiper une défaillance par la détection d'une anomalie. La détection d'une anomalie est suivie d'une étape de transfert et de stockage de tout ou partie des données stockées sur le dispositif sur lequel une anomalie est détectée vers un ou plusieurs dispositifs du système de stockage distribué. De cette façon, si la défaillance se produit, le procédé de l'invention assure une disponibilité optimale des données et un accès aux données transférées en toute transparence grâce à la mise à jour du nouveau lieu de stockage.

Selon une première variante, lorsque l'anomalie a disparu, le procédé comprend une nouvelle étape de mise à jour du lieu de stockage dudit au moins un contenu de telle sorte qu'il soit accessible sur le premier dispositif. Selon cette première variante, suite au transfert, ledit au moins un contenu transféré n'est pas effacé de la mémoire du premier dispositif. Ainsi, après disparition de l'anomalie et mise à jour du lieu de stockage sur le premier dispositif, ledit au moins un contenu est de nouveau accessible sur le premier dispositif en lieu et place dudit au moins un deuxième dispositif.

Selon une deuxième variante, si ledit au moins un contenu transféré est modifié suite au stockage des données sur ledit au moins un deuxième dispositif, le procédé comprend une étape supplémentaire d'envoi des données modifiées à destination du premier dispositif, suivi d'une étape de modification dudit au moins un contenu sur le premier dispositif à la base des données modifiées reçues. De cette façon, les données accessibles sur le premier dispositif sont des données à jour.

A noter que les modifications peuvent provenir du ou des deuxièmes dispositifs sur lesquels les contenus ont été modifiés, ou d'un dispositif autre qu'un deuxième dispositif, apte à mémoriser des modifications apportées aux contenus sur tout ou partie des dispositifs du système de stockage distribué.

Selon une troisième variante constituant une alternative à la première et à la deuxième variante mais pouvant néanmoins être utilisée en combinaison avec ces deux variantes, lorsque l'anomalie a disparu, le procédé comprend une étape de rapatriement dudit au moins un contenu issu du transfert depuis ledit au moins un deuxième dispositif vers le premier dispositif, et une étape de stockage dudit au moins un contenu rapatrié dans le premier dispositif. Cette troisième variante a pour avantage d'éviter d'identifier toutes les modifications apportées aux données suite au stockage des données sur le ou les deuxièmes dispositifs.

Comme on l'a vu précédemment, à un contenu correspond un lieu de stockage dans le système de stockage distribué. Selon une quatrième variante le rapatriement des données est accompagné d'une mise à jour du lieu de stockage dudit au moins un contenu de telle sorte que le contenu soit accessible sur le premier dispositif. Ainsi, cette variante a pour avantage de prendre en compte le cas où des contenus rapatriés occupent un emplacement différent dans la mémoire du premier dispositif par rapport à l'emplacement qu'occupaient ces mêmes contenus dans ce même premier dispositif avant le transfert.

Selon un aspect matériel, l'invention a trait à un système de stockage distribué incluant une pluralité de dispositifs de traitement de données reliés entre eux par le biais d'un réseau et comprenant des processeurs respectifs et des moyens de stockage respectifs caractérisé en ce que lesdits moyens de stockage respectifs forment un espace de stockage unifié dans lequel les données d'un utilisateur peuvent être réparties, système dans lequel à un contenu correspond un lieu de stockage respectif à utiliser lors d'un accès au contenu, et en ce qu'il comprend
- Des moyens de détection aptes à détecter une anomalie survenue sur un dispositif, dit premier dispositif, du système, une défaillance du dispositif étant susceptible de se produire empêchant un accès au contenu stocké sur le dispositif,
- Des moyens de déclenchement d'un transfert aptes à transférer, lorsqu'une anomalie est détectée sur un dispositif dit premier dispositif, au moins un contenu stocké sur le premier dispositif vers au moins un deuxième dispositif du système de stockage distribué pour y être stocké,
- Des moyens de mise à jour du nouveau lieu de stockage.

Selon un autre aspect matériel, l'invention a trait aussi à un dispositif de traitement de données, dit premier dispositif, apte à communiquer avec au moins un deuxième dispositif, les dispositifs comprenant des processeurs respectifs et des moyens de stockage caractérisé en ce que lesdits moyens de stockage respectifs forment un espace de stockage unifié dans lequel les données d'un utilisateur peuvent être réparties, dans lesquels à un contenu correspond un lieu de stockage respectif à utiliser lors d'un accès au contenu, et en ce qu'il comprend
- Des moyens de réception aptes à recevoir une détection d'une anomalie survenue sur le premier dispositif, une défaillance du dispositif étant susceptible de se produire empêchant un accès au contenu stocké sur le dispositif,
- Des moyens de déclenchement d'un transfert aptes à transférer, suite à la réception de la détection d'une anomalie, au moins un contenu stocké sur le premier dispositif vers au moins un deuxième dispositif pour y être stocké.

L'invention à trait aussi à un programme d'ordinateur apte à être mis en oeuvre sur un dispositif de traitement de données, dit premier dispositif, tel que défini ci-dessus, ledit programme comprenant des instructions de code qui, lorsque le programme est exécuté par un processeur réalise les étapes suivantes
- une étape de réception d'une détection d'une anomalie survenue sur le premier dispositif, une défaillance du dispositif étant susceptible de se produire empêchant un accès au contenu stocké sur le dispositif,
- une étape de déclenchement d'un transfert, suite à la réception de la détection d'une anomalie, au cours de laquelle au moins un contenu stocké sur le premier dispositif est transféré vers au moins un deuxième dispositif.

L'invention sera mieux comprise à la lecture de la description qui suit, donnée à titre d'exemple et faite en référence aux dessins annexés.

Le document US 2008/0086610A1 décrit un système de contrôle de mémoire selon les caractéristiques définies dans le préambule des revendications indépendantes.

### Les figures:

La figure 1 représente un système informatique sur lequel est illustré un exemple de réalisation illustrant un exemple de réalisation du procédé de l'invention.

Les figures 2 à 4 sont des vues d'échanges de données entre des dispositifs du système de stockage distribué pour illustrer des variantes au mode de réalisation décrit en référence à la figure 1.

### Description détaillée d'exemples de réalisation illustrant l'invention

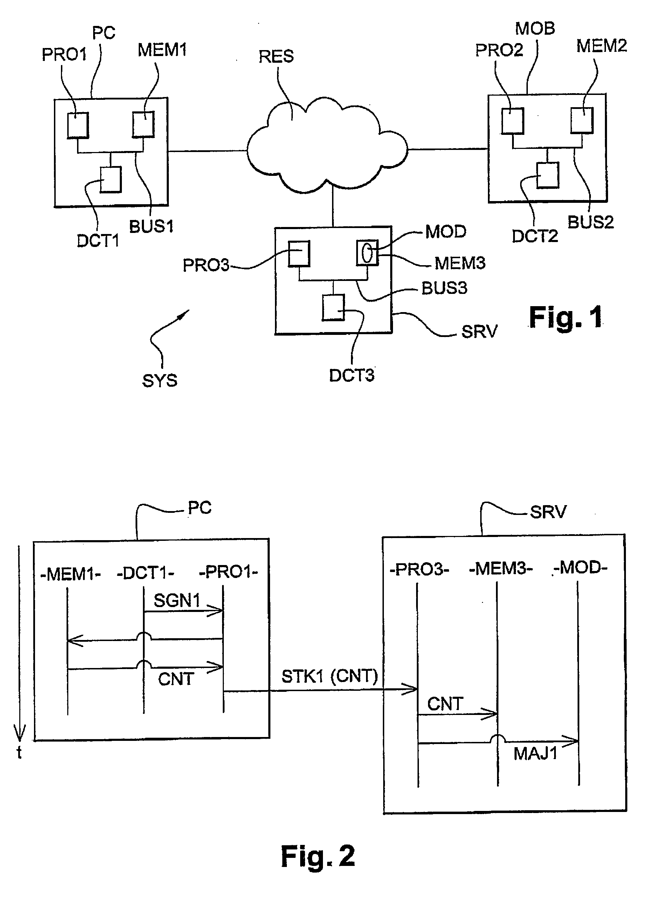

La figure 1 représente un système de stockage de données distribué SYS comprenant une pluralité de dispositifs sur lesquels des contenus peuvent être manipulées. Précisons encore qu'une manipulation inclut l'écriture, la lecture de données dans une mémoire et qu'une écriture inclut la création et la modification de données.

Chaque dispositif comprend au moins un processeur et au moins une mémoire pour le stockage de données. Dans notre exemple, le système comprend trois dispositifs de stockage, un premier dispositif PC illustré au moyen d'un ordinateur personnel, un deuxième dispositif MOB illustré au moyen d'un téléphone mobile, un troisième dispositif SRV illustré au moyen d'un serveur.

Dans notre exemple, l'ordinateur PC comprend un processeur PRO1, dit premier processeur, relié à une mémoire MEM1, dite première mémoire, par l'intermédiaire d'un bus BUS1, dit premier bus. Dans notre exemple, le téléphone MOB comprend un processeur PRO2, dit deuxième processeur, relié à une mémoire MEM2, dite deuxième mémoire, par l'intermédiaire d'un bus BUS2, dit deuxième bus. Le serveur SRV comprend un processeur PRO3, dit troisième processeur, relié à une mémoire MEM3, dite troisième mémoire, par l'intermédiaire d'un bus BUS3, dit troisième bus.

Chaque dispositif est alimenté par une source d'énergie par exemple par une source d'énergie électrique.

Dans notre exemple, les trois dispositifs sont reliés entre eux au moyen d'un réseau local RES et forment ensemble le système de stockage distribué. Rappelons qu'un système de stockage distribué offre la possibilité de répartir le stockage de données sur un ou une pluralité de dispositifs de stockage. L'exemple illustre un réseau local, cependant des dispositifs du système de stockage peuvent être situés à distance et accessibles via un réseau adapté par exemple Internet:

Les dispositifs stockent des données de toute sorte. Par exemple l'ordinateur stocke des contenus musicaux CNT.

Dans notre exemple, un module de gestion MOD a pour fonction la gestion de l'accès aux contenus. Pour cela, le module stocke une liste de contenus et le ou les lieux de stockage ainsi que l'emplacement des contenus dans les dispositifs du système de stockage distribué. Par exemple dans notre exemple, le module stocke un identifiant du contenu CNT, le lieu de stockage à savoir l'ordinateur PC et l'emplacement du contenu en mémoire. De cette façon, lors d'une demande d'accès à un ou plusieurs contenus, le module a connaissance de l'emplacement concerné du ou des contenus dans le système et peut à ce titre fournir le ou les contenus en question.

Le lieu de stockage du module MOD est quant à lui indifférent. Dans notre exemple, le module est stocké, pour offrir une disponibilité des données optimale, sur le dispositif ayant une durée MTBF (acronyme anglo-saxon de "Mean Time Between Failures") la plus importante c'est-à-dire dont la durée moyenne entre chaque panne est la plus importante. Dans notre exemple, le serveur a une durée MTBF la plus importante, c'est donc sur le serveur que le contenu musical CNT est stocké.

Selon l'invention, la gestion du lieu de stockage prend en compte l'état d'au moins un dispositif du système de stockage distribué. Si le dispositif en question a un fonctionnement anormal et qu'une défaillance est susceptible de se produire, un transfert des données du premier dispositif vers au moins un deuxième dispositif du système de stockage distribué est déclenché.

Pour cela, le système comprend au moins un détecteur d'anomalie. Dans notre exemple, chaque dispositif de stockage dispose d'un détecteur d'anomalie DCT1, DCT2, DCT3, respectivement. Ces détecteurs sont dans notre exemple reliés au bus BUS1, BUS2, BUS3, respectivement. On notera que le nombre de détecteurs importe peu pour la mise en oeuvre de l'invention. Un autre mode de réalisation aurait pu, par exemple, consister à utiliser un seul détecteur d'anomalie pour l'ensemble du système de stockage SYS; ce détecteur unique serait par exemple connecté au réseau RES et serait apte à détecter des anomalies.

L'anomalie peut être quelconque. Pour illustrer un exemple, considérons que l'anomalie soit une température excessive à l'intérieur du dispositif. Une température maximale TM est définie au delà de laquelle on considère qu'il y a une anomalie. Le franchissement de la température maximale peut alors simplement être constaté en comparant la température ambiante Ta qui règne dans le dispositif et la température maximale TA.

Nous nous référons maintenant à la figure 2 sur laquelle sont illustrées des étapes d'un exemple de réalisation. Sur cette figure sont représentés la première mémoire MEM1, le premier détecteur DCT1 le premier processeur PRO1 ainsi que le troisième processeur PRO3, la troisième mémoire MEM3 et le module MOD qui dans notre exemple est situé sur le serveur. Des échanges de données entre ces éléments vont être illustrés au moyen de flèche. Un axe temporel "t" indique aussi l'instant de transmission des différentes données.

On considère qu'à un instant donné, la température intérieure au PC devient anormale. Lors d'une première étape, le premier détecteur détecte une anomalie dans l'ordinateur personnel PC, c'est-à-dire que la température ambiante dans le dispositif devient supérieure à la température maximale TM.

Lors d'une deuxième étape, le premier détecteur DCT1 transmet un premier signal SGN1 au premier processeur PRO1.

Ensuite, lors d'une troisième étape, le premier processeur PRO1 reçoit le premier signal SGN1, interprète le signal et enclenche un transfert TRF de tout ou partie du contenu CNT stocké dans la première mémoire à destination d'un dispositif du système de stockage distribué. Dans notre exemple, les données à transférer correspondent à l'ensemble du contenu CNT. Le choix du dispositif cible peut s'effectuer de plusieurs façons décrites dans la suite de la description. Dans notre exemple, le dispositif cible choisi pour recevoir le contenu CNT est le serveur SRV.

Lors d'une quatrième étape, le troisième processeur PRO3 reçoit une première commande STK1(CNT) de la part du premier processeur PRO1 requérant le stockage du contenu CNT sur le serveur SRV.

Lors d'une cinquième étape, le troisième processeur PRO3 stocke le contenu CNT dans la troisième mémoire MEM3.

Aussi, le module MOD met à jour MAJ la table de correspondance entre le contenu CNT, son nouveau lieu de stockage c'est â-dire le serveur SRV et son emplacement dans la troisième mémoire MEM3.

A ce stade du procédé le contenu CNT qui était stocké sur l'ordinateur est désormais stocké sur le serveur SRV et accessible depuis le serveur.

Le procédé décrit ci-dessus peut faire l'objet de variantes décrites ci-dessous.

Selon une première variante, lors de la détection de l'anomalie, le transfert du contenu n'implique pas un effacement du contenu transféré sur l'ordinateur. Ainsi, lorsque l'anomalie disparaît, il n'y a pas rapatriement des données, mais uniquement une mise à jour de la table de correspondance entre le contenu et son nouveau lieu de stockage c'est-à-dire l'ordinateur PC dans notre exemple, et son emplacement dans la première mémoire MEM1.

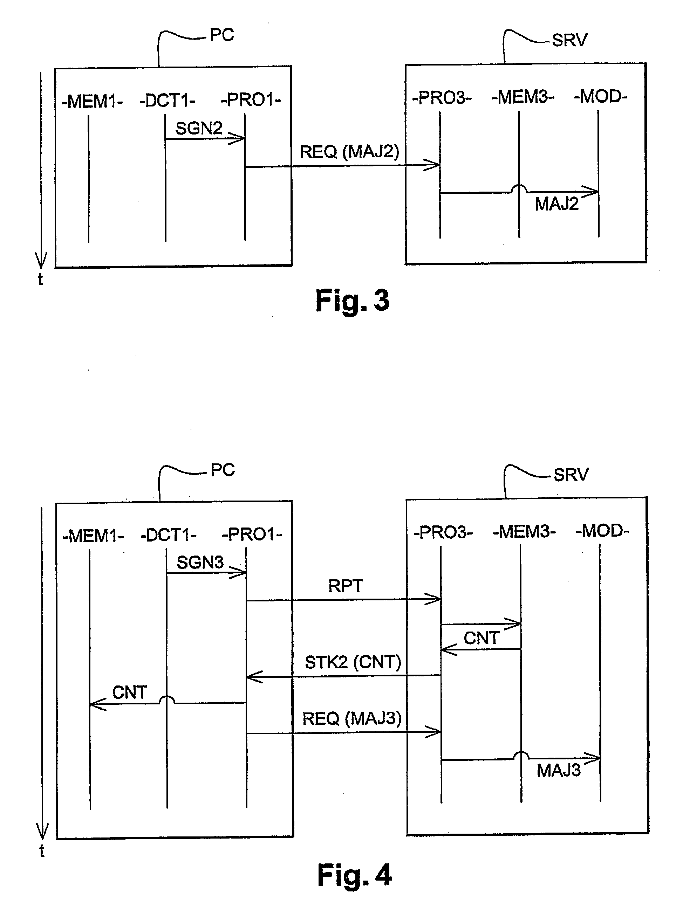

Les étapes illustrant cette première variante sont illustrées sur la figure 3. Les étapes sont les suivantes.

Lors d'une deuxième étape, le premier détecteur DCT1 transmet un deuxième signal SGN2 au premier processeur PRO1.

Ensuite, lors d'une troisième étape, le premier processeur PRO1 reçoit le deuxième signal SGN2, interprète le signal et requiert REQ(MAJ2) une mise à jour MAJ2 du nouveau lieu de stockage c'est-à-dire l'ordinateur PC dans notre exemple, et son emplacement dans la première mémoire MEM1.

La requête REQ(MAJ2) est transmise au troisième processeur PRO.

Le troisième processeur transmet une commande de mise à jour MAJ2 au module MOD.

la première variante peut être améliorée par une deuxième variante selon la quelle si le contenu transféré est modifié suite au stockage des données sur le serveur, le procédé comprend une étape supplémentaire d'envoi des données modifiées à destination de l'ordinateur PC, suivi d'une étape de modification dudit au moins un contenu sur le premier dispositif à la base des données modifiées reçues.

Selon une troisième variante constituant une alternative aux deux variantes précédentes mais pouvant être utilisée en combinaison avec ces deux variantes, la disparition de l'anomalie enclenche une étape de rapatriement des données depuis ledit le serveur vers l'ordinateur personnel. Cette variante est illustrée en référence à la figure 4. Cette figure 4 comporte les mêmes axes que ceux des figures 2 ou 3.

Les étapes illustrant cette troisième variante sont les suivantes.

Lors d'une deuxième étape, le premier détecteur DCT1 transmet un troisième signal SGN3 au premier processeur PRO1.

Ensuite, lors d'une troisième étape, le premier processeur PRO1 reçoit le troisième signal SGN3, interprète le signal et requiert un rapatriement du contenu qui a été transféré suite à la détection de l'anomalie. Pour cela, le premier processeur transmet une commande de rapatriement RPT à destination du troisième processeur.

Lors d'une quatrième étape, le troisième processeur PRO3 reçoit la commande RPT de rapatriement.

Lors d'une cinquième étape, le troisième processeur PR03 récupère le contenu CNT dans la troisième mémoire MEM3 et transmet une deuxième commande de stockage STK2(CNT) du contenu CNT à destination du premier processeur PRO1.

Le premier processeur PRO1 reçoit la deuxième commande STK2(CNT) et stocke en dans la première mémoire le contenu CNT.

Aussi, le premier processeur transmet une deuxième demande REQ(MAJ3) de mise à jour des informations relatives au nouvel emplacement du contenu CNT dans la première mémoire MEM1.

Le troisième processeur reçoit la commande de mise à jour REQ(MAJ3) et transmet une commande de mise à jour MAJ3 au module MOD.

A réception de la demande de mise à jour MAJ3, le module MOD met à jour MAJ3 la table de correspondance entre le contenu, son nouveau lieu de stockage c'est-à-dire l'ordinateur PC et son emplacement dans la première mémoire MEM1.

A ce stade du procédé les données sont de nouveau stockées sur l'ordinateur et sont accessibles sur l'ordinateur.

Ainsi, selon cette troisième variante, le premier détecteur DCT1, par exemple périodiquement, vérifie la température et si cette dernière est descendue à une température normale c'est-à-dire inférieure à la température maximale, le premier processeur PRO1 requiert auprès du serveur le rapatriement du contenu qui a été transféré ou éventuellement sa mise à jour si celui-ci a été modifié depuis le transfert de l'ordinateur PC vers le serveur.

Dans l'exemple décrit ci-dessus le transfert ne concerne que le contenu CNT. Or, le transfert peut ne concerner au choix qu'une partie du contenu ou l'ensemble du contenu. Les données à transférer peuvent être sélectionnées judicieusement. Par exemple, les données à transférer en cas d'anomalie sont préalablement sélectionnées par l'utilisateur du système de stockage SYS. Par exemple, l'utilisateur peut souhaiter sauvegarder uniquement des contenus musicaux ; dans ce cas, seules ces données seront transférées à la troisième étape.

De cette façon, la quantité de données transférées est réduite ; ceci a une importance particulière notamment lorsque le réseau local composant le système de stockage distribué a une bande passante limitée.

De plus, certaines données peuvent être retrouvées facilement car déjà dupliquées sur un autre dispositif ; il n'y a donc pas de raison de transférer de telles données.

Nous avons vu dans l'exemple qui précède que les données sont transférées de l'ordinateur vers le serveur. Or le nombre de dispositif cible peut être supérieur à l'unité. Par exemple, le transfert pourrait concerner au moins deux dispositifs cibles. Ainsi, selon une troisième variante, dans l'exemple décrit ci-dessus, à la troisième étape, une partie du contenu à transférer auraient pu être transférée vers le serveur et une autre partie vers le téléphone MOB.

Cette troisième variante est intéressante notamment lors que le dispositif visé destinataire des données à transférer n'est pas disposé à recevoir les données pour de multiples raisons. Une raison pourrait être une capacité mémoire insuffisante pour recevoir les données transférée. Une autre raison pourrait être une perte de performance liée à la réception des données transférées et leur manipulation en mémoire.

Le choix du dispositif cible peut s'effectuer de plusieurs façons. En effet, le transfert de données vers un dispositif dans un état qui n'est pas adapté à recevoir des données n'est pas judicieux. Par exemple, un dispositif du système peut être éteint et ne peut donc recevoir de données. Cette variante permet d'éviter un transfert de données vers un dispositif éteint.

## Revendications

1. Procédé de gestion du lieu de stockage de contenus dans un système de stockage distribué (SYS) incluant une pluralité de dispositifs de traitement de données (PC,SRV) reliés entre eux par le biais d'un réseau et comprenant des processeurs respectifs (PRO1, PRO3) et des moyens de stockage respectifs (MEM1, MEM3) **caractérisé en ce que** lesdits moyens de stockage respectifs forment un espace de stockage unifié dans lequel les données d'un utilisateur peuvent être réparties, système dans lequel à un contenu correspond un lieu de stockage respectif à utiliser lors d'un accès au contenu, et **en ce que** suite à une détection d'une anomalie survenue sur un dispositif, dit premier dispositif, et qu'une défaillance du dispositif est susceptible de se produire empêchant un accès au contenu stocké sur le dispositif, est déclenchée une étape de transfert, via le réseau, d'au moins un contenu (CNT) stocké dans un premier moyen de stockage (MEM1) d'un premier dispositif (PC) vers au moins une deuxième mémoire (MEM3) de l'espace de stockage unifié pour y être stocké et **en ce qu'**il comprend en outre une étape de mise à jour (MAJ1) du nouveau lieu de stockage

2. Procédé selon la revendication 1, **caractérisé en ce que** lorsque l'anomalie a disparu, le procédé comprend une nouvelle étape de mise à jour (MAJ2) du lieu de stockage dudit au moins un contenu de telle sorte qu'il soit accessible sur le premier dispositif (PC).

3. Procédé selon la revendication 1, **caractérisé en ce que**, lorsque l'anomalie a disparu, le procédé comprend une étape de rapatriement (RPT) dudit au moins un contenu (CNT) issu du transfert depuis ledit au moins un deuxième dispositif vers le premier dispositif, et une étape de stockage dudit au moins un contenu rapatrié dans le premier dispositif.

4. Système de stockage distribué (SYS) incluant une pluralité de dispositifs de traitement de données (PC,SRV) reliés entre eux par le biais d'un réseau et comprenant des processeurs respectifs (PRO1,PRO3) et des moyens de stockage respectifs (MEM1,MEM3) **caractérisé en ce que** lesdits moyens de stockage respectifs forment un espace unifié dans lequel les données d'un utilisateur peuvent être réparties, système dans lequel à un contenu correspond un lieu de stockage respectif à utiliser lors d'un accès au contenu, et **en ce qu'**il comprend
- Des moyens de détection (DCT1) aptes à détecter une anomalie survenue sur un dispositif, dit premier dispositif, du système, une défaillance du dispositif étant susceptible de se produire empêchant un accès au contenu stocké sur le dispositif,
- Des moyens de déclenchement d'un transfert aptes à transférer via le réseau, lorsqu'une anomalie est détectée sur un dispositif (PC), dit premier dispositif, au moins un contenu (CNT) stocké dans un premier moyen de stockage (MEM1) d'un le premier dispositif (PC) vers au moins une deuxième mémoire (MEM3) de l'espace de stockage unifié pour y être stocké,
- Des moyens de mise à jour (MAJ1) du nouveau lieu de stockage.

5. Dispositif de traitement de données (PC), dit premier dispositif, apte à communiquer avec au moins un deuxième dispositif (SRV) via un réseau (RES), les dispositifs comprenant des processeurs respectifs et des moyens de stockage respectifs **caractérisé en ce que** lesdits moyens de stockage respectifs forment un espace unifié dans lequel les données d'un utilisateur peuvent être réparties dans lesquels à un contenu correspond un lieu de stockage respectif à utiliser lors d'un accès au contenu, et **en ce qu'**il comprend
- Des moyens de réception (PRO1) aptes à recevoir une détection d'une anomalie survenue sur le premier dispositif, une défaillance du dispositif étant susceptible de se produire empêchant un accès au contenu stocké sur le dispositif,
- Des moyens de déclenchement d'un transfert (PRO1) aptes à transférer, suite à la réception de la détection d'une anomalie, au moins un contenu (CNT) stocké dans les moyens de stockage du premier dispositif vers au moins une deuxième mémoire de l'espace de stockage unifié, via le réseau, pour y être stocké.

6. Programme d'ordinateur apte à être mis en oeuvre sur un dispositif de traitement de données, dit premier dispositif, tel que défini dans la revendication 5, ledit programme comprenant des instructions de code qui, lorsque le programme est exécuté par un processeur réalise les étapes suivantes :
- une étape de réception d'une détection d'une anomalie survenue sur le premier dispositif, une défaillance du dispositif étant susceptible de se produire empêchant un accès au contenu stocké sur le dispositif,
- une étape de déclenchement d'un transfert, suite à la réception de la détection d'une anomalie, au cours de laquelle au moins un contenu stocké dans les moyens de stockage du premier dispositif est transféré vers au moins une deuxième mémoire de l'espace de stockage unifié, via le réseau, pour y être stocké.

## Patentansprüche

1. Verfahren zur Verwaltung des Speicherorts von Inhalten in einem verteilten Speichersystem (SYS), das eine Vielzahl von Datenverarbeitungsvorrichtungen (PC, SRV) umfasst, die miteinander durch ein Netzwerk verbunden sind und jeweilige Prozessoren (PRO1, PR03) und jeweilige Speichereinrichtungen (MEM1, MEM3) enthalten, **dadurch gekennzeichnet, dass** die jeweiligen Speichereinrichtungen einen vereinigten Speicherbereich bilden, in dem die Daten eines Benutzers verteilt werden können, System, bei dem einem Inhalt ein jeweiliger bei einem Zugriff auf den Inhalt zu verwendender Speicherort entspricht, und dass nach einer Erfassung einer in einer erste Vorrichtung genannten Vorrichtung eingetretenen Anomalie, und wenn ein Ausfall der Vorrichtung auftreten kann, der einen Zugriff auf einen in der Vorrichtung gespeicherten Inhalt verhindert, ein Schritt der Übertragung, über das Netzwerk, mindestens eines in einer ersten Speichereinrichtung (MEM1) einer ersten Vorrichtung (PC) gespeicherten Inhalts (CNT) zu mindestens einem zweiten Speicher (MEM3) des vereinigten Speicherbereichs ausgelöst wird, um dort gespeichert zu werden, und dass es außerdem einen Schritt der Aktualisierung (MAJ1) des neuen Speicherorts enthält.

2. Verfahren nach Anspruch 1, **dadurch gekennzeichnet, dass**, wenn die Anomalie verschwunden ist, das Verfahren einen neuen Aktualisierungsschritt (MAJ2) des Speicherorts des mindestens einen Inhalts enthält, so dass er in der ersten Vorrichtung (PC) zugänglich ist.

3. Verfahren nach Anspruch 1, **dadurch gekennzeichnet, dass**, wenn die Anomalie verschwunden ist, das Verfahren einen Schritt der Rückführung (RPT) des mindestens einen von der Übertragung stammenden Inhalts (CNT) von der mindestens einen zweiten Vorrichtung zur ersten Vorrichtung und einen Schritt des Speicherns des mindestens einen rückgeführten Inhalts in der ersten Vorrichtung enthält.

4. Verteiltes Speichersystem (SYS), das eine Vielzahl von Datenverarbeitungsvorrichtungen (PC, SRV) umfasst, die durch ein Netzwerk miteinander verbunden sind und jeweilige Prozessoren (PRO1, PR03) und jeweilige Speichereinrichtungen (MEM1, MEM3) enthalten, **dadurch gekennzeichnet, dass** die jeweiligen Speichereinrichtungen einen vereinigten Bereich bilden, in dem die Daten eines Benutzers verteilt werden können, System, bei dem einem Inhalt ein jeweiliger bei einem Zugriff auf den Inhalt zu verwendender Speicherort entspricht, und dass es enthält
- Erfassungseinrichtungen (DCT1), die eine in einer erste Vorrichtung genannten Vorrichtung des Systems eingetretene Anomalie erfassen können, wobei ein Ausfall der Vorrichtung auftreten kann, der einen Zugriff auf den in der Vorrichtung gespeicherten Inhalt verhindert,
- Auslösevorrichtungen einer Übertragung, die, wenn eine Anomalie in einer erste Vorrichtung genannten Vorrichtung (PC) erfasst wird, mindestens einen in einer ersten Speichereinrichtung (MEM1) einer ersten Vorrichtung (PC) gespeicherten Inhalt (CNT) über das Netzwerk zu mindestens einem zweiten Speicher (MEM3) des vereinigten Speicherbereichs übertragen können, um dort gespeichert zu werden,
- Aktualisierungseinrichtungen (MAJ1) des neuen Speicherorts.

5. Datenverarbeitungsvorrichtung (PC), erste Vorrichtung genannt, die mit mindestens einer zweiten Vorrichtung (SRV) über ein Netzwerk (RES) kommunizieren kann, wobei die Vorrichtungen jeweilige Prozessoren und jeweilige Speichereinrichtungen enthalten, **dadurch gekennzeichnet, dass** die jeweiligen Speichereinrichtungen einen vereinigten Bereich bilden, in dem die Daten eines Benutzers verteilt werden können, in denen einem Inhalt ein jeweiliger Speicherort entspricht, der bei einem Zugriff auf den Inhalt zu verwenden ist, und dass sie enthält
- Empfangseinrichtungen (PRO1), die eine Erfassung einer in der ersten Vorrichtung eingetretenen Anomalie empfangen können, wobei ein Ausfall der Vorrichtung auftreten kann, der einen Zugriff auf den in der Vorrichtung gespeicherten Inhalt verhindert,
- Auslöseeinrichtungen einer Übertragung (PRO1), die nach dem Empfang der Erfassung einer Anomalie mindestens einen in den Speichereinrichtungen der ersten Vorrichtung gespeicherten Inhalt (CNT) zu mindestens einem zweiten Speicher des vereinigten Speicherbereichs über das Netzwerk übertragen können, um dort gespeichert zu werden.

6. Computerprogramm, das in einer wie im Anspruch 5 definierten, erste Vorrichtung genannten Datenverarbeitungsvorrichtung eingesetzt werden kann, wobei das Programm Codeanweisungen enthält, die, wenn das Programm von einem Prozessor ausgeführt wird, die folgenden Schritte durchführen:
- einen Empfangsschritt einer Erfassung einer in der ersten Vorrichtung eingetretenen Anomalie, wobei ein Ausfall der Vorrichtung auftreten kann, die einen Zugriff auf den in der Vorrichtung gespeicherten Inhalt verhindert,
- einen Auslöseschritt einer Übertragung, nach dem Empfang der Erfassung einer Anomalie, während dessen mindestens ein in den Speichereinrichtungen der ersten Vorrichtung gespeicherter Inhalt zu mindestens einem zweiten Speicher des vereinigten Speicherbereichs über das Netzwerk übertragen wird, um dort gespeichert zu werden.

## Claims

1. Method for managing the contents storage site in a distributed storage system (SYS) including a plurality of data processing devices (PC,SRV) interlinked by way of a network and comprising respective processors (PRO1, PRO3) and respective storage means (MEM1,MEM3), **characterized in that** said respective storage means form a unified storage space in which the data of a user can be distributed, in which system to a content there corresponds a respective storage site to be used during access to the content, and **in that** subsequent to a detection of an anomaly arising on a device, the so-called first device, and that a failure of the device may occur preventing access to the content stored on the device, is triggered a step of transfer, via the network, of at least one content (CNT) stored in a first storage means (MEM1) of a first device (PC) to at least one second memory (MEM3) of the unified storage space so as to be stored therein and **in that** it furthermore comprises a step of updating (UPD1) the new storage site.

2. Method according to Claim 1, **characterized in that** when the anomaly has disappeared, the method comprises a new step of updating (UPD2) the site of storage of said at least one content in such a way that it is accessible on the first device (PC).

3. Method according to Claim 1, **characterized in that**, when the anomaly has disappeared, the method comprises a step of repatriation (RPT) of said at least one content (CNT) arising from the transfer from said at least one second device to the first device, and a step of storing said at least one repatriated content in the first device.

4. Distributed storage system (SYS) including a plurality of data processing devices (PC,SRV) interlinked by way of a network and comprising respective processors (PRO1, PRO3) and respective storage means (MEM1,MEM3), **characterized in that** said respective storage means form a unified space in which the data of a user can be distributed, in which system to a content there corresponds a respective storage site to be used during access to the content, and **in that** it comprises
- detection means (DCT1) able to detect an anomaly arising on a device, the so-called first device, of the system, a failure of the device which may occur preventing access to the content stored on the device,
- means for triggering a transfer which are able to transfer via the network, when an anomaly is detected on a device (PC), the so-called first device, at least one content (CNT) stored in a first storage means (MEM1) of a first device (PC) to at least one second memory (MEM3) of the unified storage space so as to be stored therein,
- means for updating (UPD1) the new storage site.

5. Data processing device (PC), the so-called first device, able to communicate with at least one second device (SRV) via a network (NET), the devices comprising respective processors and respective storage means, **characterized in that** said respective storage means form a unified space in which the data of a user can be distributed and in which to a content there corresponds a respective storage site to be used during access to the content, and **in that** it comprises
- reception means (PRO1) able to receive a detection of an anomaly arising on the first device, a failure of the device which may occur preventing access to the content stored on the device,
- means for triggering a transfer (PRO1) which are able to transfer, subsequent to the receiving of the detection of an anomaly, at least one content (CNT) stored in the storage means of the first device to at least one second memory of the unified storage space, via the network, so as to be stored therein.

6. Computer program able to be implemented on a data processing device, the so-called first device, such as defined in Claim 5, said program comprising code instructions which, when the program is executed by a processor, carry out the following steps:
- a step of receiving a detection of an anomaly arising on the first device, a failure of the device which may occur preventing access to the content stored on the device,
- a step of triggering a transfer, subsequent to the receiving of the detection of an anomaly, in the course of which at least one content stored in the storage means of the first device is transferred to at least one second memory of the unified storage space, via the network, so as to be stored therein.
